# DEMANDE DE BREVET EUROPEEN

(11) **EP 1 323 609 A1**
(43) Date de publication de la demande: **02.07.2003**
(21) Numéro de dépôt: 02028913.8
(22) Date de dépôt: 23.12.2002
(51) Int. Cl.: B60T 17/22, B60T 13/52

(54) **Capteur de feux d'allumage des freins à l'intérieur de la valve de commande du servomoteur d'assistance pneumatique au freinage**

(30) Priorité: 31.12.2001 FR 0117116
(71) Demandeur: ROBERT BOSCH GmbH, 70442 Stuttgart (DE)
(72) Inventeur: Maligne, Jean-Charles, 93300 Aubervilliers (FR); Richard, Philippe, 77500 Chelles (FR)
(74) Mandataire: Hurwic, Aleksander Wiktor

(57) **Abrégé**

L'invention concerne un capteur de feux d'allumage des freins disposé à l'intérieur de la valve de commande du servomoteur d'assistance pneumatique au freinage utilisé dans l'industrie automobile.

Le circuit du capteur est du type normalement fermé au repos. Il comporte un contact métallique mobile 4, monté sur la tige de poussée 1 du servomoteur d'assistance pneumatique au freinage, découpé en étoile, dont une face est au repos en contact avec une lame de contact fixe par rapport à la tige de poussée.

Le déplacement de la tige de poussée 1 vers la gauche provoque l'ouverture du circuit.

## Description

La présente invention concerne un capteur de feux d'allumage des freins à l'intérieur de la valve de commande du servomoteur d'assistance pneumatique au freinage, consistant plus précisément à intégrer dans la valve de commande un circuit électrique détectant le passage d'un courant ou son interruption au niveau de la tige de poussée du servomoteur d'assistance pneumatique au freinage.

On connaît déjà des dispositifs capteurs de feux d'allumage des freins, notamment, des dispositifs dans lesquels le contacteur de feux d'allumage des freins est situé au niveau de la pédale de frein. Le déplacement de la pédale de frein et donc le début d'une action de freinage est détecté par un interrupteur qui ferme un circuit électrique lorsque la pédale de frein vient en appui contre l'interrupteur.

Néanmoins, des capteurs de ce type présentent pour les constructeurs automobiles des inconvénients qui proviennent, notamment, du fait que 1 dispositif actuel est externe au servomoteur, ce qui implique un montage et un réglage par le constructeur automobile qui souhaite recevoir un système de freinage, de montage et de réglage le plus simple et le plus transparent pour lui.

C'est un but de la présente invention que de fournir un dispositif de commande d'allumage des feux de freinage comportant des moyens de détection d'une phase de freinage, disposés à l'intérieur d'un servomoteur d'assistance pneumatique au freinage.

C'est, par conséquent, un but de la présente invention, de fournir un dispositif électrique permettant la détection du mouvement d'une pièce mobile en liaison avec la tige de poussée du servomoteur d'assistance pneumatique au freinage, elle-même sous la commande de la pédale de freinage du véhicule. C'est aussi un but de la présente invention, de fournir un tel dispositif sous la forme d'un circuit électrique fonctionnant pour commander des feux d'allumage des freins, ledit circuit, normalement fermé au repos, étant ouvert par déplacement d'une pièce mobile consécutivement au freinage.

Ces buts sont atteints par un circuit électrique dans un exemple de réalisation comportant un contact mobile de la forme d'une rondelle évidée à sa périphérie, l'une des faces de ladite rondelle étant appliquée sous l'action d'un ressort, dans sa couronne centrale contre un filtre tronconique enserrant l'arbre de la tige de poussée du servomoteur d'assistance pneumatique au freinage et dans sa partie périphérique contre une pièce annulaire remplissant l'espace entre la rondelle, la paroi du filtre tronconique et la paroi cylindrique du corps du servomoteur d'assistance pneumatique au freinage, ladite pièce annulaire étant traversée par une lame de contact reliée au fil de la connectique.

C'est aussi un but de la présente invention, de fournir un tel dispositif sous la forme d'un circuit électrique fonctionnant pour commander des feux d'allumage des freins, ledit circuit, normalement ouvert au repos, se fermant par déplacement d'une pièce mobile consécutivement au freinage.

Ces buts sont atteints par un circuit électrique dans un exemple de réalisation comportant une pièce en forme de couronne dans laquelle est logée une pièce évidée en étoile, une pièce mobile de forme cylindrique, percée d'orifices circulaires à son extrémité en contact avec la pièce en étoile alors que son autre extrémité est d'une seule pièce avec le boîtier de la connectique, les pièces en étoile et cylindrique comportant chacune des éléments conducteurs reliés par un ressort conducteur qui assure au repos le jeu entre ces deux pièces, tandis qu'un autre ressort à la périphérie du corps du servomoteur d'assistance pneumatique au freinage maintient la pièce en étoile au repos en appui contre une butée circulaire solidaire de la paroi interne du capot du servomoteur et tandis qu'une collerette montée sur une partie de l'arbre de la tige d'actionnement du servomoteur d'assistance pneumatique au freinage retient en arrière la pièce mobile cylindrique.

Les objets ci-dessus, ainsi que d'autres caractéristiques et avantages de l'invention, apparaîtront de manière plus complète au cours de la description détaillée ci-après, qui est faite de formes particulières de réalisation, données à titre indicatif et non limitatif, en référence aux dessins en annexe, sur lesquels :
- la figure 1 est une vue externe d'une première forme de réalisation du capteur de feux d'allumage des freins selon la présente invention, disposé à l'intérieur de la valve de commande du servomoteur d'assistance pneumatique au freinage,
- la figure 2 est une vue montrant les composants du capteur de feux d'allumage des freins,
- la figure 3 est une vue en coupe axiale du capteur de feux d'allumage des freins à l'intérieur de la valve de commande du servomoteur d'assistance pneumatique au freinage,
- la figure 4 est une vue externe d'une seconde forme de réalisation du capteur de feux d'allumage des freins selon la présente invention, à l'intérieur de la valve de commande du servomoteur d'assistance pneumatique au freinage,
- la figure 5 est une vue montrant les composants du capteur de feux d'allumage des freins, disposé autour de la tige de commande du servomoteur d'assistance pneumatique au freinage,
- la figure 6 est une vue externe du capteur seul,
- la figure 7 est une vue montrant les composants de la partie fixe du capteur de feux d'allumage des freins,
- la figure 8 est une vue en coupe axiale du capteur de feux d'allumage des freins à l'intérieur de la valve de commande du servomoteur d'assistance pneumatique au freinage.

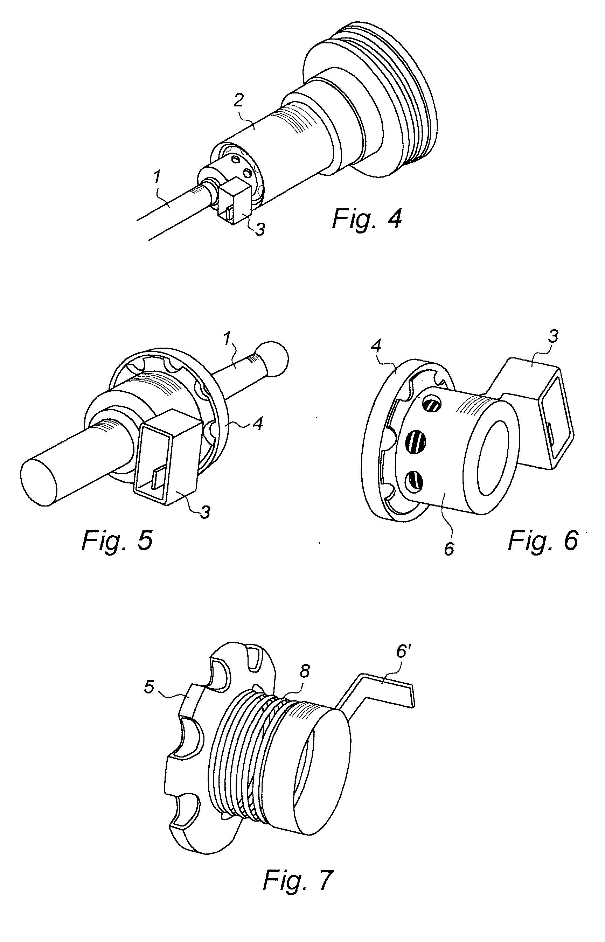

Sur les figures 1 à 3 et 1 à 8, on a utilisé les mêmes références pour désigner les mêmes éléments.

Dans une première forme de réalisation, on décrira une version du capteur de feux d'allumage des freins à l'intérieur de la valve de commande du servomoteur d'assistance pneumatique au freinage, en constituant un circuit naturellement fermé au repos.

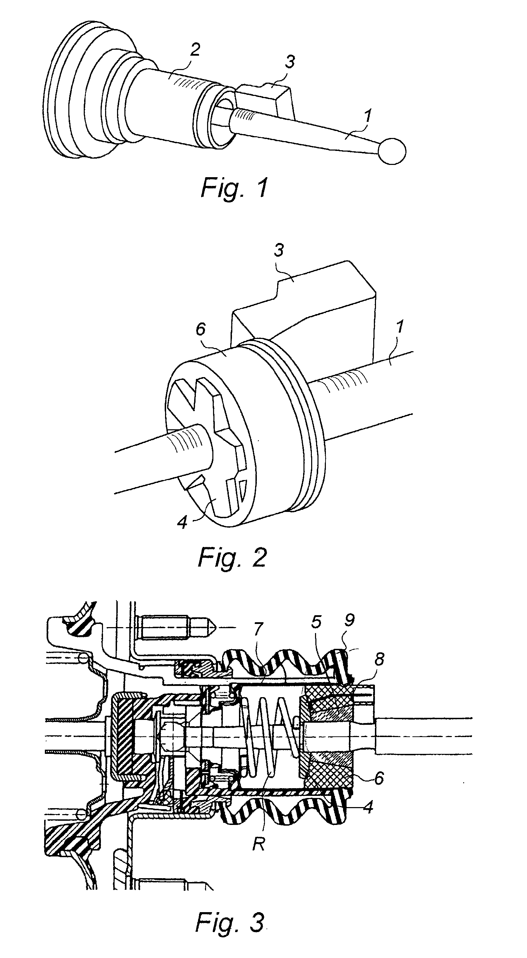

Si l'on se reporte à la figure 1, on peut voir la tige de poussée 1 liée à la pédale de frein (non représentée), le capot 2 dans lequel est logé le circuit du capteur et duquel émerge la connectique contenue dans le boîtier 3.

A l'intérieur du capot 2, un contact mobile métallique 4 est monté sur la tige de poussée 1. Le contact 4 se présente sous la forme d'une rondelle évidée à sa périphérie, de façon à ne pas obstruer le passage de l'air par rapport à la section de passage sur le clapet. Cette rondelle peut se présenter, avantageusement mais non nécessairement, sous une forme étoilée, ainsi qu'on le voit sur la figure 2. L'une des faces de la rondelle 4 est appliquée sous l'action d'un ressort R, dans sa couronne centrale, contre un filtre 5 enserrant l'arbre de la tige de poussée 1 du servomoteur d'assistance pneumatique au freinage, et dans sa partie périphérique contre une pièce annulaire 6 remplissant l'espace entre la rondelle du contact mobile 4, la paroi du filtre 5 et la paroi cylindrique 7 du corps du servomoteur d'assistance pneumatique au freinage. Le filtre 5 peut être avantageusement de forme tronconique, ainsi qu'il est représenté, cette forme permettant une immobilisation entre le filtre 5 et la bague annulaire 6, étant entendu que l'on pourrait prévoir d'autres moyens équivalents pour remplir cette fonction. Cette pièce annulaire 6, solidaire de la paroi cylindrique 7, est traversée par une lame de contact 8 reliée au fil du boîtier 3 de la connectique. Un soufflet 9 en matière caoutchoutée, assure l'étanchéité entre le corps du servomoteur d'assistance pneumatique au freinage et l'environnement extérieur formé par le compartiment moteur.

Le fonctionnement du capteur est le suivant :
En appuyant sur la pédale de frein (non représentée), le contact métallique mobile 4 monté sur la tige de poussée 1, se déplace avec lui. Le contact entre les branches de cette rondelle en étoile et la pièce annulaire 6 est rompu, la lame de contact 8, assurant la liaison électrique entre l'une des branches de l'étoile et la connectique contenue dans le boîtier 3 engendrera la rupture de la continuité électrique du circuit de commande du signal d'allumage des feux d'allumage des freins, ce qui aura pour effet de provoquer l'allumage des feux de freinage. Un courant très faible circule dans le circuit pour limiter les risques d'étincelles.

Dans une seconde forme de réalisation, on décrira une version du capteur de feux d'allumage des freins à l'intérieur de la valve de commande du servomoteur d'assistance pneumatique au freinage, en constituant un circuit naturellement ouvert au repos.

Si l'on se reporte à la figure 1, on peut voir la tige de poussée 1, liée à la pédale de frein (non représentée), le capot 2 dans lequel est logé le circuit du capteur et duquel émerge la connectique contenue dans le boîtier 3.

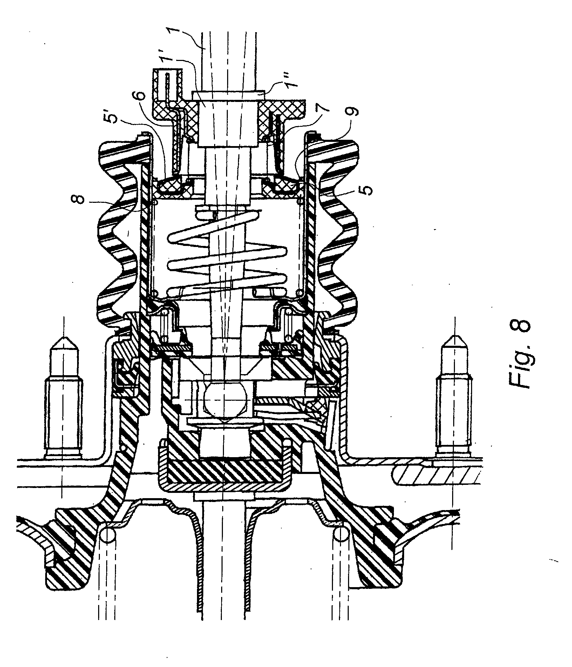

A l'intérieur du capot 2, on trouve une pièce en forme de couronne 4, dans laquelle est logée une pièce évidée 5 à la périphérie de laquelle ont été usinés des orifices afin de permettre le passage de l'air à pression atmosphérique. Dans une forme de réalisation, elle se présente avantageusement mais non nécessairement sous une forme étoilée ainsi qu'il apparaît sur la figure 7. Une pièce mobile 6, ayant la forme d'un boîtier cylindrique, ajouré à son extrémité en contact avec la pièce évidée 5, est solidaire et forme une seule pièce avec le boîtier 3 de la connectique. Les pièces 5 et 6 comportent chacune des éléments conducteurs 5' et 6', reliés par un ressort conducteur 7 qui assure au repos le jeu entre les pièces 5 et 6 et a pour fonction de conduire le courant. Un ressort 8 maintient la pièce 5 au repos en appui contre une butée circulaire ou circlip, fixée contre la paroi interne 9 du capot 2. La pièce 6, montée sur la partie 1' de l'arbre de la tige d'actionnement du servomoteur d'assistance pneumatique au freinage est retenue sur celui-ci par une collerette 1". Un soufflet 10, en matière caoutchoutée, assure l'étanchéité entre le corps du servomoteur d'assistance pneumatique au freinage et l'ensemble des organes du capteur. Si l'on compare les figures 3 et 8, correspondant aux deux formes de réalisation, on peut constater que les fonctions de filtre et de contact mobiles, réalisées par deux organes différents 4 et 5 sur la figure 3, sont intégrées en une seule pièce sur la figure 8.

Le fonctionnement du capteur est le suivant :
En appuyant sur la pédale de frein, la pièce 6 est déplacée vers la gauche sur la figure 8, sous l'action de la tige d'actionnement du servomoteur d'assistance pneumatique au freinage, reliée à la pédale de frein, et vient en contact avec la pièce 5, comblant le jeu créé par le ressort 7 et fermant le circuit électrique formé par les éléments conducteurs 5' et 6'. De la sorte, le début de la phase de freinage se trouve détecté, comandant le signal d'allumage des feux de freinage.

Bien entendu, l'invention n'est pas strictement limitée aux formes particulières de réalisation représentées, bien qu'elles soient avantageuses et il est possible d'envisager d'autres variantes techniquement équivalentes sans sortir pour autant du cadre de l'invention.

## Revendications

1. Dispositif de commande d'allumage des feux de freinage **caractérisé par le fait qu'**il comporte des moyens de détection d'une phase de freinage, disposés à l'intérieur d'un servomoteur d'assistance pneumatique au freinage.

2. Dispositif de commande d'allumage des feux de freinage selon la revendication 1, **caractérisé par le fait que** les moyens de détection d'une phase de freinage sont formés par un circuit électrique.

3. Dispositif de commande d'allumage des feux de freinage selon la revendication 2, **caractérisé par le fait que** le circuit électrique logé dans la valve de commande du servomoteur d'assistance pneumatique au freinage, à l'intérieur d'un capot (2) autour de la tige de poussée du servomoteur est du type normalement fermé au repos.

4. Dispositif de commande d'allumage des feux de freinage selon la revendication 2, **caractérisé par le fait que** ledit circuit électrique normalement fermé au repos comporte un contact mobile (4) de la forme d'une rondelle en étoile, l'une des faces de ladite rondelle étant appliquée, sous l'action d'un ressort R, dans sa couronne centrale contre un filtre (5) enserrant l'arbre de la tige de poussée (1) du servomoteur d'assistance pneumatique au freinage et dans sa partie périphérique contre une pièce annulaire (6) remplissant l'espace entre la rondelle (4), la paroi du filtre (5) et la paroi cylindrique (7) du corps du servofrein, ladite pièce annulaire (6) étant traversée par une lame de contact (8) reliée au fil du boîtier (3) de la connectique.

5. Dispositif de commande d'allumage des feux de freinage selon la revendication 2, **caractérisé par le fait que** le circuit électrique logé dans la valve de commande du servomoteur d'assistance pneumatique au freinage, à l'intérieur d'un capot (2) autour de la tige de poussée du servomoteur est du type normalement ouvert au repos.

6. Dispositif de commande d'allumage des feux de freinage selon la revendication 2, **caractérisé par le fait que** ledit circuit électrique normalement ouvert au repos comporte une pièce en forme de couronne (4) dans laquelle est logée une pièce évidée (5), une pièce mobile (6) de forme cylindrique, est percée d'orifices circulaires à son extrémité en contact avec la pièce (5) alors que son autre extrémité est d'une seule pièce avec le boîtier (3) de la connectique, la pièce (5) évidée à sa périphérie et la pièce cylindrique (6) comportent chacune des éléments conducteurs (5') et (6') reliés par un ressort conducteur (7) qui assure au repos le jeu entre les pièces (5) et (6), tandis qu'un ressort (8) à la périphérie du corps du servomoteur d'assistance pneumatique au freinage maintient la pièce (5) au repos en appui contre une butée circulaire (9) solidaire de la paroi interne du capot (2) et tandis qu'une collerette (1") montée sur la partie (1') de l'arbre (1) de la tige d'actionnement du servofrein retient en arrière la pièce cylindrique (6).
